# NEUE EUROPÄISCHE PATENTSCHRIFT

(11) **EP 1 990 265 B2**
(45) Veröffentlichungstag und Bekanntmachung des Hinweises auf die Entscheidung über den Einspruch: **16.07.2014**
(45) Hinweis auf die Patenterteilung: 15.06.2011
(21) Anmeldenummer: 08155526.0
(22) Anmeldetag: 30.04.2008
(51) Int. Cl.: B62K 25/02, B62M 9/12

(54) **Steckachsensystem zur Radbefestigung**
Shaft system for attaching a wheel
Système d'axe d'enfichage destiné à la fixation de roue

(30) Priorität: 05.05.2007 DE 202007006451 U
(43) Veröffentlichungstag der Anmeldung: 12.11.2008
(73) Patentinhaber: Klieber, Jochen, 83342 Tacherting (DE)
(72) Erfinder: Grätz, Michael c/o Liteville GmbH, 87487 Wiggensbach (DE)
(74) Vertreter: Maiwald Patentanwalts GmbH

(56) Entgegenhaltungen:
- EP-A- 0 284 535
- EP-A- 1 452 435
- EP-A2- 1 452 435
- WO-A-2005/051753
- CH-A- 272 136
- CH-A- 272 136
- US-A- 6 089 675

## Beschreibung

Die vorliegende Erfindung betrifft ein Steckachsensystem zur Radbefestigung. Insbesondere betrifft die vorliegende Erfindung ein Steckachsensystem zur Radbefestigung bei welchem der Steckachsenkopf mittels eines konischen Sitzes im entsprechenden Ausfallende eines Rahmens oder einer Gabel gehalten wird.

Die nachfolgende Beschreibung der vorliegenden Erfindung erfolgt anhand eines Steckachsensystems zur Radbefestigung für ein Fahrrad. Die Erfindung wird hierdurch jedoch nicht beschränkt und ist, wie sich für den Fachmann ergibt, auch auf Motorräder oder andere Gegenstände, welche Vorrichtungen zum Befestigen von Rädern aufweisen, anzuwenden.

Steckachsensysteme zur Radbefestigung sind im Stand der Technik bekannt. Das Dokument EP 1 452 435 stellt hierbei den nächstliegenden Stand der Technik des unabhängigen Anspruchs 1 dar. Bei Steckachsensystemen üblicher Bauart weisen die Ausfallenden einer Gabel oder eines Rahmens eines Fahrrades zumeist im wesentliche kreisförmige Durchführungen auf, durch die hindurch die Achse beim Einsetzen des Rades gesteckt und mittels einer Verschraubung und/oder einem Schnellspannmechanismus an den Ausfallenden fixiert wird. Um das Einsetzen der Steckachse zu erleichtern, weisen die Durchführungen an den Ausfallenden sowie die Achsaufnahme der Nabe zumeist einen Innendurchmesser auf, der etwa 0,5mm bis 2 mm größer als der Außendurchmesser der Steckachse ist.

Bei derartigen Steckachsensystemen gemäß dem Stand der Technik hat sich gezeigt, dass das durch diese Durchmesserdifferenz hervorgerufene Spiel der Achse in den Ausfallenden zu Instabilitäten des Rades bezüglich der Gabel bzw. des Rahmens führen kann. Diese werden zum einen durch die während der Benutzung des Fahrrades auftretenden Belastungen hervorgerufen, zum anderen ergeben sie sich jedoch häufig auch durch Fehlbedienungen des Benutzers beim Einsetzen und Festspannen der Steckachse bzw. des Rades.

Zur Vermeidung derartiger Nachteile zeigt die WO 2005/051753 ein Steckachsensystem, bei welchem die Steckachse durch eine kreisförmige Durchführung in einem ersten Ausfallende einer Fahrradgabel hindurchgeschoben und in dem gegenüberliegenden zweiten Ausfallende mittels eines an der Steckachse angeordneten Gewindes unmittelbar in dieses eingeschraubt wird. Die rohrförmig ausgeführte Steckachse weist zudem an ihren beiden Enden zwei Längsschlitzungen auf, wodurch die beiden Enden beim Betätigen des Spannmechanismus durch das beiderseitige Eindrücken bzw. Einziehen von Konussen gespreizt werden. Hierdurch wird das Spiel der Achse bezüglich der Ausfallenden verringert und es resultiert eine verhältnismäßig feste, kraftschlüssige Verbindung zwischen der Steckachse und der Gabel bzw. dem Rahmen des Fahrrades.

Es zeigt sich jedoch, dass dieses System sehr empfindlich gegenüber Fehlbedienungen ist, insbesondere bei einem Einschrauben mit zu geringem Drehmoment bzw. einem zu schwachen Verspannen der Achse mittels des Spannmechanismus, und zudem vor allem für den professionellen und den semi-professionellen Bereich noch immer keine ausreichende Stabilität des Sitzes des Rades bezüglich der Gabel oder des Fahrradrahmens erreicht wird.

Aufgabe der vorliegenden Erfindung ist es daher, ein verbessertes Steckachsensystem zur Radbefestigung zur Verfügung zu stellen, welches die Nachteile des Standes der Technik zumindest teilweise überwindet und insbesondere eine stabile Befestigung eines Rades an einer Gabel bzw. einem Rahmen ermöglicht. Darüber hinaus ist es wünschenswert, ein Steckachsensystem zur Radbefestigung zur Verfügung zu stellen, welches eine erhöhte Bediensicherheit aufweist bzw. durch welches die Gefahr von Fehlbedienungen durch den Benutzer minimiert wird.

Diese und weitere Aufgaben werden durch ein Steckachsensystem zur Radbefestigung gemäß dem unabhängigen Anspruch 1 gelöst. Bevorzugte Ausführungsformen der vorliegenden Erfindung sind Gegenstand der abhängigen Ansprüche.

Demnach weist ein erfindungsgemäßes Steckachsensystem zur Radbefestigung eine Achse mit einem Achsabschnitt auf, welcher im eingebauten Zustand der Steckachse zwischen einem ersten Ausfallende und einem zweiten Ausfallende eines Rahmens oder einer Gabel angeordnet ist und durch welchen die Radnabe getragen wird. Der Achsabschnitt der Achse erstreckt sich dabei in bekannter Art und Weise durch den Innenbereich der Radnabe hindurch.

Die Achse weist wenigstens eine an einem ersten Ende des Abschnittes angeordnete radial vorspringende Schulter auf, welche dazu dient im eingebautem Zustand eine parallel zur Richtung der Mittelachse der Achse wirkende Kraft zu übertragen. Durch diese Schulter weist die Achse am ersten Ende des Achsabschnittes einen gegenüber dem Achsabschnitt vergrößerten Außendurchmesser auf (Steckachsenkopf).

Das erfindungsgemäße Steckachsensystem weist zudem am dem ersten Ende gegenüberliegenden zweiten Ende des Achsabschnittes ein Gewinde auf, welches beim Einbau der Steckachse nach dem Hindurchführen der Achse durch die Durchführung im ersten Ausfallende und die zwischen den beiden Ausfallenden angeordnete Nabe in ein hierzu korrespondierendes, am zweiten Ausfallende angeordnetes, Gewinde eingeschraubt wird.

Erfindungsgemäß weist das Steckachsensystem ein Andruckelement auf, welches in Form eines Ringes aufgeführt ist und eine im wesentlichen zentrische Durchführung aufweist, durch welche hindurch sich im eingebauten Zustand zumindest ein Teil des Achsabschnittes erstreckt. Der Innendurchmesser des Ringes weist dabei einen Rücksprung auf, an welchem im eingebauten Zustand die Schulter des ersten Endes der Achse zur Anlage kommt. Hierdurch wird die parallel zur Mittelachse der Steckachse wirkende Kraft zumindest teilweise auf das Andruckelement übertragen.

Durch den innen liegenden Rücksprung des Andruckelementes weist dieses vorzugsweise zwei unterschiedliche Innendurchmesser auf, wobei der kleinere Innendurchmesser dem zweiten Ende des Achsabschnittes zugewandt ist und der größere Innendurchmesser vorzugsweise so gewählt ist, dass das Andruckelement mit geringfügigem Spiel über den Steckachsenkopf übergeschoben werden kann.

Das Andruckelement weist außerdem auf der dem zweiten Ende des Achsabschnittes zugewandten Seite an seinem äußeren Durchmesser eine bezüglich der Mittelachse der Steckachse geneigte und insbesondere konisch zulaufende Andruckfläche auf, welche im eingebauten Zustand an einer hierzu korrespondierenden, am ersten Ausfallende angeordneten, Anlagefläche anliegt.

Das Andruckelement des erfindungsgemäßen Steckachsensystems bewirkt in Verbindung mit der hierzu korrespondierenden Anlagefläche des ersten Ausfallendes einen selbstzentrierenden und im wesentlichen spielfreien Sitz der Achse. Insbesondere gewährleistet das erfindungsgemäße Steckachsensystem durch die Ausführung des Andruckelementes als von der Achse getrenntes Element im Sinne einer Hülse durch die sich der Achsabschnitt der Achse hindurch erstreckt, dass beim Einschrauben der Steckachse die zwischen der Anlagefläche und der Andruckfläche wirkende Reibung nicht zu dem möglicherweise falschen Eindruck des Benutzers führt, die Steckachse sei bereits mit dem nötigen Drehmoment angezogen, selbst wenn dies nicht der Fall sein sollte. Somit kann hierdurch die Gefahr von Fehlbedienungen reduziert werden.

Schließlich ermöglicht das erfindungsgemäße Steckachsensystem durch das auf die Achse aufgesetzte Andruckelement das problemlose Lösen der eingeschraubten Steckachse auch im Falle von Korrosionen zwischen der Andruckfläche des Andruckelementes auf der einen Seite und der Anlagefläche des Ausfallendes auf der anderen, da die Auflagefläche zwischen der Schulter der Achse und dem Rücksprung des Andruckelementes deutlich kleiner ist, als die zwischen der geneigt verlaufenden Andruckfläche und der hierzu korrespondierenden Anlagefläche.

Bei der vorliegenden Erfindung ist das ringförmige Andruckelement bezüglich der Mittelachse der Achse im Wesentlichen parallel und zumindest teilweise geschlitzt, oder das ringförmige Andruckelement ist im Wesentlichen parallel zu einer bezüglich der Mittelachse der Achse windschiefen Achse zumindest teilweise geschlitzt oder aber entlang einer bezüglich der Mittelachse der Achse zumindest teilweise spiralförmig verlaufenden Kurve.

Diese Ausführungsformen erlauben eine weitere Verbesserung des Sitzes und der Zentrierung des erfindungsgemäßen Steckachsensystems im ersten Ausfallende, da beim Einschrauben der Steckachse das Andruckelement durch die hierauf wirkenden Kräfte geringfügig zusammengepresst wird, wodurch neben der zumindest teilweise Formschlüssigen Anlage des Andruckelements am ersten Ausfallende eine kraftschlüssige Verbindung zwischen dem Andruckelement und dem Achsabschnitt bzw. dem Steckachsenkopf hergestellt wird.

Bevorzugt weist der Außendurchmesser des ersten Endes der Achse im Bereich der vorspringenden Schulter und insbesondere im Bereich des größeren Durchmessers der Achse einen Einstich auf, in welchem ein O-Ring derart angeordnet werden kann bzw. angeordnet ist, dass der O-Ring im Wesentlichen ortsfest auf der Achse fixiert ist und zumindest ein Teil des Querschnittes des O-Ring-Materials über den Außendurchmesser der Achse hervorsteht. Eine derartige Anordnung eines O-Ringes auf der Achse ermöglicht es, dass das nach Art einer Hülse über die Achse geschobene Andruckelement durch eine flexible Verformung der O-Ringes beim Aufstecken ebenfalls bezüglich der Achse gehalten wird, so dass zum Einen eine Verliersicherung des Andruckelementes gegeben ist und zum Anderen eine spielfreie Anordnung des Andruckelementes auf der Achse.

Die Verwendung eines flexiblen Materials für den O-Ring ermöglicht es trotzdem, im Falle geschlitzter Andruckelemente, dass beim Einschrauben zwischen dem Andruckelement und der Achse ein Kraftschluss und damit eine besonders spielfreie Fixierung der Achse im Ausfallende erfolgt. Bei einer bevorzugten Weiterbildung weist der Innendurchmesser des Andruckelements einen zum Einstich am Außendurchmesser der Achse korrespondierenden Einstich auf, in welchen der O-Ring bei aufgeschobenem Andruckelement eingreift und dessen halt bezüglich der Achse weiter verbessert.

Bei einer weiteren bevorzugten Ausführungsform weist die Andruckfläche wenigstens einen Einstich auf, in welchem ein zweiter O-Ring derart angeordnet werden kann bzw. angeordnet ist, dass ein Teil des Querschnittes des O-Ring-Materials über die Andruckfläche hervorsteht.

Durch diese Ausführungsform wird beim Einschrauben der Steckachse die Reibung zwischen der Andruckfläche und der Anlagefläche weiter verringert bis zu dem Moment, an dem durch die auf das Andruckelement übertragene Kraft das O-Ring-Material ausreichend verformt wird, so dass eine im Wesentlichen formschlüssige Auflage zwischen der Andruckfläche und der Anlagefläche erfolgt.

Auf diese Weise wird das Einschrauben der Achse für den Benutzer weiter erleichtert, jedoch nur bis zu dem Moment einer vollflächigen Anlage der Andruckfläche an der Anlagefläche. Insbesondere im Falle der Verwendung eines geschlitzten Andruckelementes wird hierdurch sichergestellt, dass die Steckachse mit ausreichend großem Drehmoment angezogen wird, wodurch eine spielfreie Fixierung der Achse und damit eine sichere Aufnahme des Rades in der Gabel bzw. in dem Rahmen gewährleistet ist. Die Gefahr einer Fehlbedienung durch den Benutzer wird dadurch weiter verringert.

Bei einer bevorzugten Ausführungsform des erfindungsgemäßen Steckachsensystems ist das am zweiten Ausfallende angeordnete Gewinde in der Form einer Innengewindehülse ausgeführt, welche im Ausfallende vorzugsweise drehbar eingesetzt ist. Bevorzugt ist das in der Hülse angeordnete Innengewinde, in welches bei der Montage der Achse das an deren zweiten Ende angeordnete Gewinde eingeschraubt wird bezüglich des Außendurchmessers der Hülse bzw. bezüglich der Mittelachse der Achse exzentrisch ausgeführt. Hierdurch ist es durch ein Drehen der Hülse bei eingeschraubter oder nahezu eingeschraubter Steckachse möglich, die Lage der Achse bezüglich der beiden Ausfallenden einzustellen und dadurch Maßtoleranzen bei der Fertigung der Gabel oder des Rahmens auszugleichen, wodurch ein exakter Geradeauslauf des Rades gewährleistet werden kann.

Bei einer weiteren bevorzugten Ausführungsform ist die am ersten Ausfallende angeordnete Anlagefläche als Innenfläche einer Hülse ausgeführt, welche beispielsweise durch ein Einstecken oder ein Einschrauben in die am ersten Ausfallende vorgesehene Durchführung eingesetzt ist. Auf diese Weise ist es möglich, Anlageflächen, welche beispielsweise durch Korrosion oder mechanische Beanspruchung beschädigt wurden, auszuwechseln und darüber hinaus die Produktion von Rahmen oder Gabeln, welche entsprechend geformte Anlageflächen zur Verwendung mit Steckachsen gemäß der vorliegenden Erfindung aufweisen, zu vereinfachen. Schließlich erlaubt es diese Ausfiihrungsform auch, zumindest bei einem Teil der am Markt verfügbaren Gabeln oder Rahmen herkömmlicher Bauart durch ein Einsetzen einer entsprechenden Hülse die Verwendung des erfindungsgemäßen Steckachsensystems mit allen seinen Vorteilen zu ermöglichen.

Bevorzugt weist die Achse des erfindungsgemäßen Steckachsensystems am Steckachsenkopf einen Innensechskant oder Torx, oder eine ähnliche Einrichtung zum Ansetzen eines Werkzeuges auf, mit welchem die Achse eingesetzt und festgezogen werden kann. Hierbei haben sowohl Innensechskant als auch Torx den Vorteil, dass sie im Bereich der Fahrradindustrie übliche und gebräuchliche Werkzeuge darstellen, die zudem die Übertragung ausreichend großer Drehmomente auf die Achse problemlos ermöglichen.

Es sei allerdings auch daraufhingewiesen, dass das erfindungsgemäße Steckachsensystem mit anderen Einrichtungen zum Einsetzen und Festziehen der Achse versehen werden kann, wie z.B. Flügelmuttern, drehbar angeordnete Hebel, insbesondere nach Art eines Schnellspannsystems, Sechskantmuttern und dergleichen.

Bevorzugt weist der äußere Teil des zweiten Endes des Achsabschnittes einen sich verjüngenden Querschnitt auf, so dass die Achse hierdurch an ihrem äußeren Ende eine konisch zulaufende Form hat. Hierdurch wird das Einführen der Steckachse in die Durchführung des ersten Ausfallendes und insbesondere den Innenbereich der Radnabe ebenso erleichtert, wie deren Einschrauben in das am zweiten Ausfallende vorgesehene Gewinde.

Bei einer besonders bevorzugten Ausführungsform der vorliegenden Erfindung besteht der Achsabschnitt der Achse aus einem rohrförmigen Material, welches vorzugsweise im Bereich des ersten und/oder des zweiten Endes der Achse eine erhöhte Materialstärke aufweist, so dass im Bereich des Andruckelementes wie auch im Bereich des Gewindes die Zug-, Druck-, Scher- und Querkräfte bei der Benutzung des Fahrrades durch eine entsprechend erhöhte Materialstärke ausreichend aufgenommen werden.

Dabei erlaubt es die Verwendung eines rohrförmigen Materials für die Achse dennoch, bei nahezu gleichbleibender Stabilität der Achse eine Gewichtsreduktion gegenüber Achsen, welche aus einem Vollmaterial bestehen, zu erreichen. Dennoch ist es auch im Sinne der vorliegenden Erfindung den Achsabschnitt der Achse aus einem Vollmaterial zu fertigen.

Bei einer Ausführungsform der Erfindung wird zur Erleichterung des Einsetzens der Achse an deren zweiten Ende eine kegelförmig spitz zulaufende Kappe vorgesehen. Bevorzugt wird diese Kappe für die Montage aufgesetzt, so dass das Hindurchführen der Achse durch die Durchführung am ersten Ausfallende und den Innenbereich der Radnabe sowie das Einführen in das Gewinde am zweiten Ausfallende erleichtert wird. Bei einer Weiterbildung dieser Ausführungsform besteht nach der Montage die Möglichkeit des Abnehmens der entsprechenden Kappe, wodurch bei gleichbleibender Funktionalität eine weitere Gewichtseinsparung ermöglicht wird.

Besonders bevorzugt weist das erfindungsgemäße Steckachsensystem zur Radbefestigung wenigstens ein weiteres, zumindest teilweise längs geschlitztes ringförmiges Andruckelement auf, welches mit einer bezüglich der Mittelachse der Achse konisch zulaufenden Andruckfläche versehen ist, die im eingebauten Zustand an einer hierzu korrespondierenden Anlagefläche der Radnabe zur Anlage kommt. Hierdurch erfolgt eine spielfreie, form- bzw. kraftschlüssige Befestigung der Nabe auf dem Achsabschnitt zwischen den beiden Ausfallenden.

Durch das Einschrauben und festziehen der Steckachse in das zweite Ausfallende wird eine entlang der Mittelachse der Steckachse wirkende Kraft auf das wenigstens eine Andruckelement ausgeübt, wodurch dieses gegen die wenigstens eine korrespondierende Anlagefläche der Nabe gepresst wird und durch die Konizität der Andruckfläche eine Verformung des wenigstens einen Andruckelementes erfolgt. Hierdurch erfolgt ein Kraftschluss zwischen dem wenigstens einen Andruckelement und dem Achsabschnitt. Besonders bevorzugt ist die Radnabe beiderseits mit derartigen weiteren Andruckelemente versehen, so dass ein spielfreier und besonders stabiler Sitz der Radnabe und damit des Rades bezüglich der Ausfallenden erreicht wird.

Vorzugsweise betragen die Konizitätswinkel der Andruckflächen und/oder der Anlageflächen des erfindungsgemäßen Steckachsensystems zwischen 20 und 70° bezüglich der Mittelachse der Achse, vorzugsweise zwischen 30 und 60° und besonders bevorzugt zwischen 40 und 50°. Bevorzugt sind die Konizitätswinkel der Andruckflächen und der Anlageflächen dabei im Wesentlichen gleich groß.

Die Achse bzw. deren Achsabschnitt, die Andruckelemente, die Gewindehülse sowie die weiteren Elemente des erfindungsgemäßen Steckachsensystems sind bevorzugt zumindest teilweise aus einem Material gefertigt, welches aus einer Gruppe ausgewählt ist, die Metalle und Metalllegierungen, vorzugsweise Leichtmetalle wie z. B. Aluminium und Aluminiumlegierungen, insbesondere Aluminium-Titanlegierungen sowie Kohlefaserwerkstoffe, Kunststoffe und insbesondere faserverstärkte Kunststoffe sowie Verbundwerkstoffe aus diesen Werkstoffen und Kombinationen hiervon enthält. Dabei ist es bevorzugt, gegebenenfalls unterschiedliche Materialien für die Achse, die Andruckelemente, die Gewindehülse und/oder der weiteren Elemente des erfindungsgemäßen Steckachsensystems zu verwenden, um ein Anliegen gleicher Werkstoffe aneinander zu vermeiden, was zu unerwünschten Knarzgeräuschen, erhöhter oder erniedrigter Reibung, Korrosion oder dergleichen führen kann.

Weitere Merkmale der vorliegenden Erfindung ergeben sich aus der nachfolgenden detaillierten Beschreibung in Verbindung mit den Figuren und den Ansprüchen. Es zeigen:
- Fig. 1: ein erfindungsgemäßes Steckachsensystem in eingebautem Zustand;
- Fig. 2: verschiedene Ansichten einer ersten Ausführungsform eines Andruckelementes eines erfindungsgemäßen Steckachsensystems;
- Fig. 3: verschiedene Ansichten einer zweiten Ausführungsform eines Andruckelementes eines erfindungsgemäßen Steckachsensystems;
- Fig. 4: verschiedene Ansichten einer dritten Ausführungsform eines Andruckelementes eines erfindungsgemäßen Steckachsensystems;
- Fig. 5: eine erste Ausführungsform einer Achse eines Steckachsensystems gemäß der vorliegenden Erfindung;
- Fig. 6: eine zweite Ausführungsform einer Achse eines Steckachsensystems gemäß der vorliegenden Erfindung;
- Fig. 7: eine Ausführungsform eines weiteren Andruckelementes zur Befestigung einer Radnabe auf der Achse eines Steckachsensystems gemäß der vorliegenden Erfindung.

Im Rahmen der nachfolgenden Beschreibung der Figuren kennzeichnen gleiche Bezugszeichen in verschiedenen Figuren gleiche Elemente bzw. Elemente mit gleichartigen Funktionen.

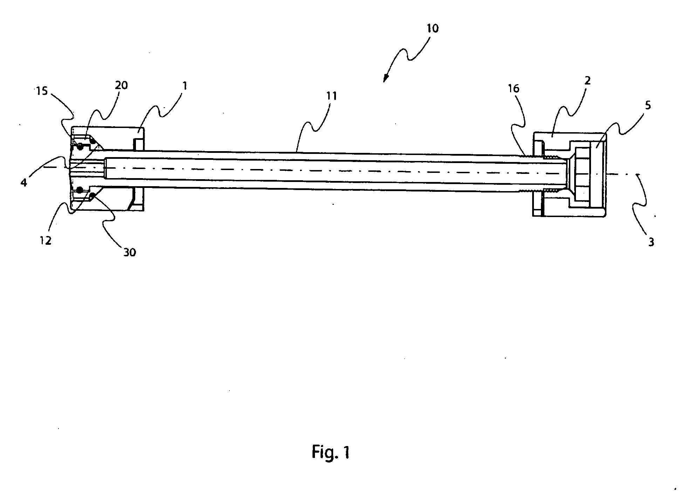

Ein erfindungsgemäßes Steckachsensystem zur Radbefestigung gemäß Fig. 1 weist einen Achsabschnitt 11 auf, welcher sich zumindest teilweise zwischen dem ersten Ausfallende 1 und dem zweiten Ausfallende 2 einer Gabel oder eines Rahmens erstreckt. Das erste Ausfallende 1 weist eine im Wesentlichen kreisförmige Durchführung auf, durch welche der Achsabschnitt 11 der Achse 10 verläuft.

Am ersten Ende des Achsabschnittes 11 weist die Achse eine Schulter 12 auf, wodurch der Außendurchmesser der Achse 10 in diesem Bereich gegenüber dem Außendurchmesser des sich zwischen den Ausfallenden erstreckenden Achsabschnitts vergrößert ist.

Am zweiten Ende des Achsabschnittes 11 weist die Achse 10 ein Gewinde 16 auf, welches in eine am zweiten Ausfallende 2 eingesetzte Gewindehülse 5 eingeschraubt ist. Durch das Einschrauben und Festziehen der Achse 10 erfolgt der Aufbau einer parallel zur Richtung der Mittelachse 3 wirkenden Kraft zwischen den beiden Ausfallenden 1,2, durch welche eine hierzwischen angeordnete Radnabe 60 gehalten wird.

Die Gewindehülse 5 ist im zweiten Ausfallende 2 drehbar eingesetzt und kann hierin mittels eines Inbusschlüssels gedreht werden. Das in der Gewindehülse 5 angeordnete Gewinde, welches für ein Einschrauben der Achse 10 vorgesehen ist, ist dabei bezüglich des Umfangs der Gewindehülse 5 geringfügig exzentrisch angeordnet, so dass bei einem Drehen der Gewindehülse 5 die Mittelachse 3 der Achse 10 auf einem Kegelmantel mit sehr geringem Durchmesser bewegt wird.

Um das Hindurchführen der Achse 10 durch die Durchführung im Ausfallende 1 sowie ein Einschrauben des Gewindes 16 in die Gewindehülse 5 zu erleichtern, weist das zweite Ende des Achsabschnittes einen sich verjüngenden Außendurchmesser 40 auf. Die Achse 10 des Steckachsensystems gemäß Fig. 1 ist zur Gewichtseinsparung aus einem rohrförmigen Material gefertigt, wobei im Bereich des Steckachsenkopfes ein Innensechskant 13 angeordnet ist, welcher das Einsetzen eines entsprechenden Werkzeuges zum Einschrauben und Festziehen der Achse ermöglicht.

Bei dem Steckachsensystem gemäß Fig. 1 ist ein Andruckelement 20 vorgesehen, welches einen innen liegenden Rücksprung 23 aufweist, an welchen die Schulter 12 der Achse anliegt. Hierdurch wird die entlang der Mittelachse 3 der Achse wirkende Kraft von der Schulter 12 auf das Andruckelement 20 übertragen, dessen bezüglich der Mittelachse 3 geneigte Andruckfläche 22 gegen die Anlagefläche 4 gepresst wird.

Im Bereich des Steckachsenkopfes der Achse 10 weist dieser einen Einstich 14 zur Aufnahme eines O-Rings 15 auf, welcher am Andruckelement 20 in einen dort vorgesehenen, korrespondierenden Einstich 24 am Innendurchmesser des Andruckelementes eingreift. Auf diese Weise kann beim Herausschrauben und Herausnehmen der Achse 10 wirksam verhindert werden, dass das Andruckelement 20 sich von der Achse 10 löst.

Im Bereich der bezüglich der Mittelachse 3 geneigt verlaufenden Andruckfläche 22 weist das Andruckelement 20 einen weiteren Einstich 25 zur Aufnahme eines O-Rings 30 auf. Durch diesen O-Ring wird beim Einschrauben und Festziehen der Achse 10 eine vollflächige Anlage der Andruckfläche 22 an die Anlagefläche 4 erst ab dem Moment ermöglicht, ab dem das im unmontierten Zustand über die Andruckfläche 22 herausragende Material des O-Rings 30 ausreichend stark verformt bzw. flach gedrückt wurde. Somit kann sichergestellt werden, dass das Drehmoment, mit welchem die Achse angezogen wurde, für einen sicheren und spielfreien Sitz der Achse ausreichend groß ist.

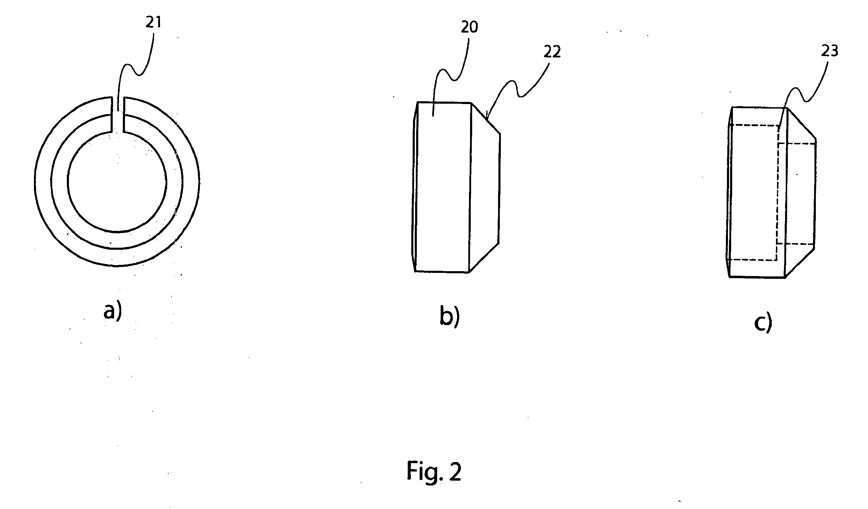

Fig. 2 zeigt eine erste Ausführungsform eines Andruckelementes des erfindungsgemäßen Steckachsensystems, bei welchem in Fig. 2 a) eine Längsschlitzung 21 erkennbar ist, welche bei aufgeschobenem Andruckelement 22 im Wesentlichen parallel zur Mittelachse 3 der Achse 10 verläuft. Bei dieser Ausführungsform des Andruckelementes 20 weist weder dessen Innendurchmesser noch die Andruckfläche 22 einen Einstich zur Aufnahme eines O-Rings auf Der innen liegende Rücksprung 23 ist so ausgeführt, dass hieran die Schulter 12 der Achse 10 im eingebauten Zustand planflächig anliegt und auf diese Weise durch die Schulter 12 eine im wesentlichen entlang der Mittelachse 3 wirkende Kraft auf das Andruckelement übertragen wird.

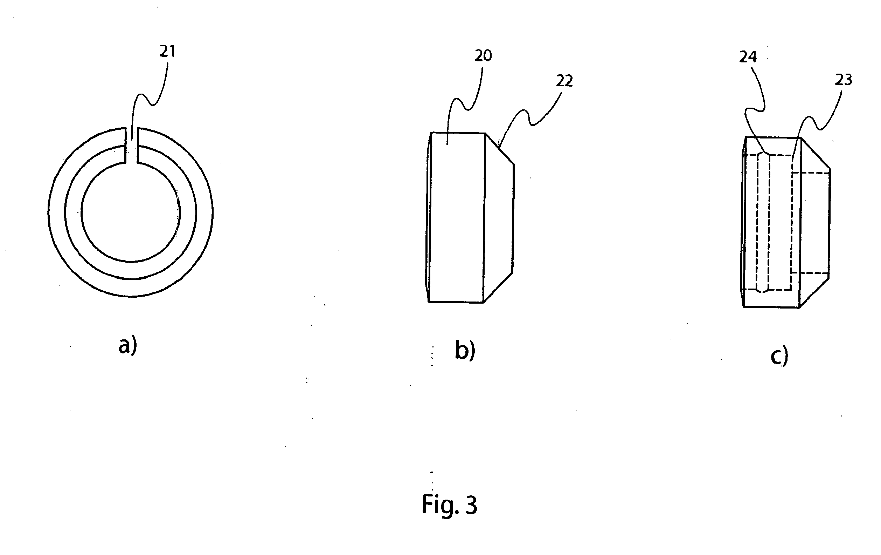

Fig. 3 zeigt eine weitere Ausführungsform eines Andruckelements 22 des erfindungsgemäßen Steckachsensystems, welches im Wesentlichen dem Andruckelement gemäß Fig. 2 entspricht, jedoch weist diese Ausführungsform am Innendurchmesser auf der dem ersten Ende der Achse 10 zugewandten Seite des Andruckelementes einen Einstich 24 auf, in welchem ein auf der Achse 10 angeordneter Ring beim Aufschieben des Andruckelements auf die Achse 10 eingreift, um ein versehentliches Lösen des Andruckelements 22 von der Achse 10 zu vermeiden und einen zentrischen Sitz des Andruckelementes 20 zu gewährleisten.

Ebenso wie im Falle des Andruckelementes gemäß Fig. 2 ermöglicht es die Schlitzung 21, dass das Andruckelement gemäß Fig. 3 beim Einschrauben und Festziehen der Achse 10 geringfügig verformt wird und hierdurch eine kraftschlüssige Verbindung zwischen der Achse 10 und dem Andruckelement 20 resultiert.

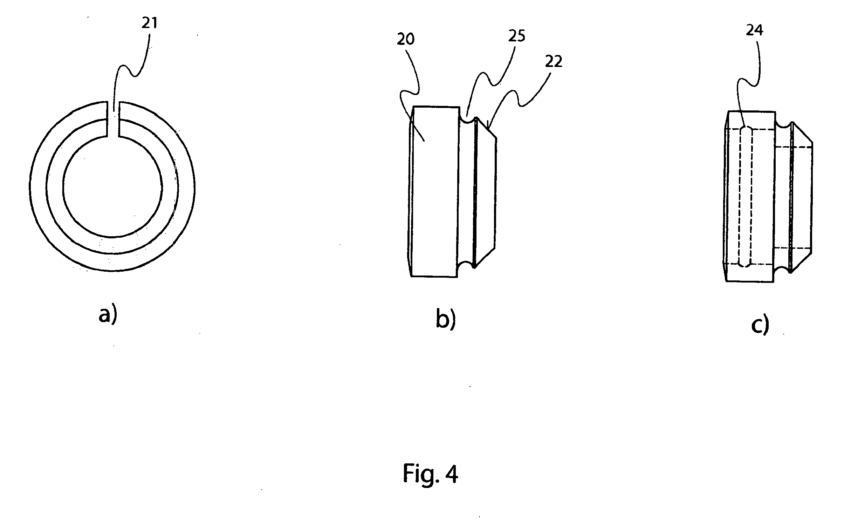

Fig. 4 zeigt eine weitere Ausführungsform eines Andruckelementes eines erfindungsgemäßen Steckachsensystems, welches dem Andruckelement 20 gemäß Fig. 1 entspricht. Dieses Andruckelement unterscheidet sich vom Andruckelement gemäß Fig. 3 durch einen im Bereich der Andruckfläche 22 angeordneten Einstich 25, welcher der Aufnahme eines O-Rings 30 dient. Der Einstich 25 ist so ausgeführt, dass der Querschnitt des O-Ring-Materials im unmontierten Zustand zumindest teilweise über die Andruckfläche 22 herausragt, um während des Einschraubens und Anziehens der Achse 10 den Reibungswiderstand zwischen der Andruckfläche 22 und der Anlagefläche 4 des ersten Ausfallendes 1 zu vermindern, bis die Verformung des O-Rings 30 ausreichend weit fortgeschritten ist, so dass eine planflächige Auflage der Andruckfläche 22 auf der Anlagefläche 4 erfolgt.

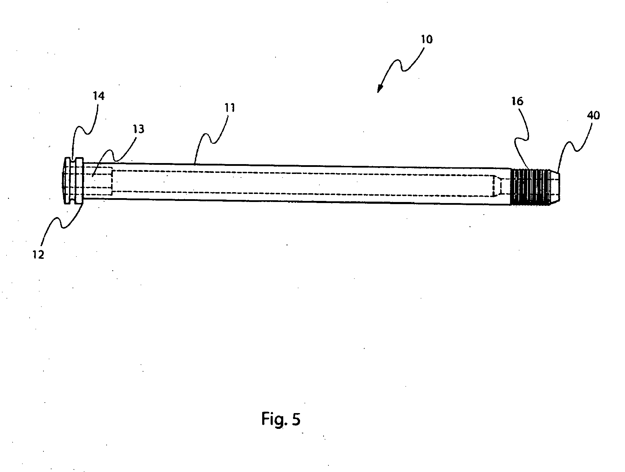

Fig. 5 zeigt eine Ausführungsform einer Achse 10 eines erfindungsgemäßen Steckachsensystems, wobei der Innendurchmesser der rohrförmigen Achse 10 im Bereich des Gewindes 16 vermindert ist, so dass hier eine erhöhte Materialstärke zur Aufnahme entsprechend höherer Kräfte erreicht wird. Im Bereich des ersten Endes der Achse 10 ist ein Innensechskant 13 zur Aufnahme eines entsprechenden Werkzeuges mit größerer Abmessung vorgesehen, wodurch die Einleitung eines stark erhöhten Drehmoments auf die Achse beim Anziehen ermöglicht wird.

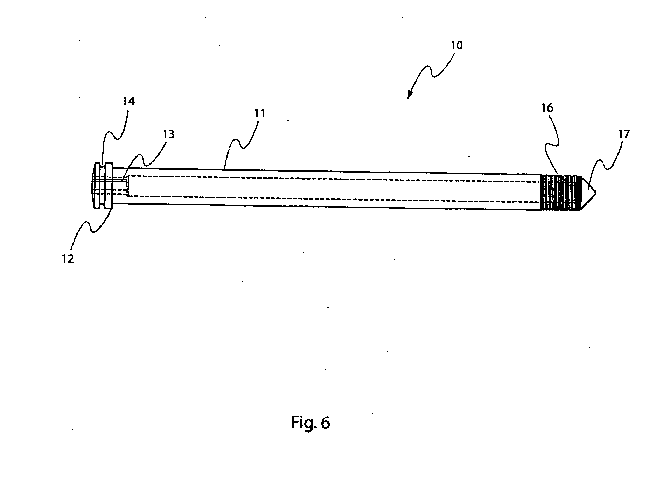

Fig. 6 zeigt eine der Fig. 1 entsprechende Ausführungsform einer Achse 10, wobei im Bereich des zweiten Endes der Achse eine konisch, im Wesentlichen spitz zulaufende Kappe 17 angeordnet ist, welche dem erleichterten Durchführen der Achse 10 durch die Durchführung am ersten Ausfallende 1 und den Innenbereich der Radnabe 60 sowie ein vereinfachtes Einschrauben in das am zweiten Ausfallende angeordnete Gewinde ermöglicht.

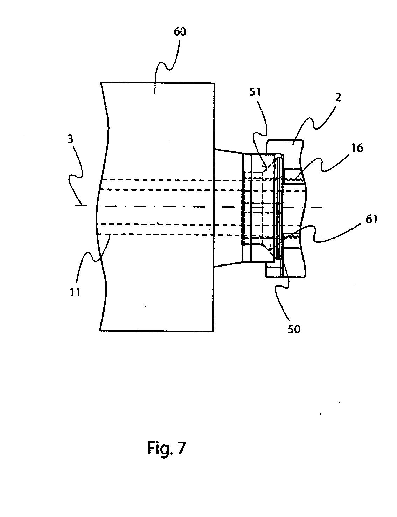

Fig. 7 zeigt ein weiteres, zwischen dem ersten und dem zweiten Ausfallende im Achsabschnitt 11 angeordnetes Andruckelement 50, welches eine bezüglich der Achse 3 konisch zulaufende Andruckfläche 51 aufweist, die in eingebautem Zustand an der nabenseitigen Anlagefläche 61 anliegt. Durch das Einschrauben und Festziehen der Achse 10 wird auf das Andruckelement 50 eine entlang der Mittelachse 3 in Richtung der Nabenmitte wirkende Kraft übertragen, wodurch dieses aufgrund seiner Längsschlitzung geringfügig zusammengepresst wird, und hierdurch eine kraftschlüssige Verbindung zwischen dem Achsabschnitt 11 und dem Andruckelement 50 resultiert. Auf diese Weise wird die Nabe 60 spielfrei und sicher auf den Achsabschnitt 11 fixiert und hierdurch eine verbesserte Befestigung des Rades bezüglich der Gabel bzw. des Rahmens gewährleistet.

## Patentansprüche

1. Steckachsensystem zur Radbefestigung, aufweisend:
- eine Achse (10) mit einen Achsabschnitt (11), welcher sich im eingebauten Zustand der Steckachse zwischen einem ersten Ausfallende (1) und einem zweiten Ausfallende (2) eines Rahmens oder einer Gabel erstreckt und welcher der Aufnahme einer Nabe (60) dient; wobei sich der Achsabschnitt der Achse im eingebauten Zustand durch einen Innenbereich der Nabe hindurch erstreckt;
- wenigstens eine an einem ersten Ende des Achsabschnittes (11) angeordnete radial vorspringende Schulter (12), durch welche im eingebauten Zustand eine parallel zur Richtung der Mittelachse (3) des Achsabschnittes (11) wirkende Kraft übertragen wird; wobei der Außendurchmesser der Achse (10) in dem Bereich der Schulter (12) gegenüber dem Außendurchmesser des sich zwischen den Ausfallenden erstreckenden Achsabschnitts vergrößert ist, und das erste Ende des Achsabschnittes durch die Schulter einen Steckachsenkopf bildet;
- ein an einem dem ersten Ende im wesentlichen gegenüber liegenden zweiten Ende des Achsabschnittes (11) angeordnetes Gewinde (16), welches im eingebauten Zustand in ein am zweiten Ausfallende (2) angeordnetes Gewinde eingeschraubt ist;
wobei wenigstens ein ringförmiges Andruckelement (20) vorgesehen ist, welches eine im wesentlichen zentrische Durchführung aufweist durch die sich zumindest ein Teil des Achsabschnittes (11) erstreckt und wenigstens einen innen liegenden Rücksprung (23), an welchen im eingebauten Zustand die Schulter (12) anliegt, so dass die Schulter die Kraft zumindest teilweise auf das Andruckelement (20) überträgt;
wobei das Andruckelement (20) auf der dem zweiten Ende des Achsabschnittes (11) zugewandten Seite eine bezüglich der Mittelachse (3) des Achsabschnittes (11) konisch zulaufende Andruckfläche (22) aufweist, welche im eingebauten Zustand an einer hierzu korrespondierenden am ersten Ausfallende (1) angeordneten Anlagefläche (4) zur Anlage kommt; und wobei
wobei das ringförmige Andruckelement (20) im wesentlichen parallel zur Mittelachse (3) zumindest teilweise geschlitzt ist; oder
das ringförmige Andruckelement (20) im wesentlichen parallel zu einer bezüglich der Mittelachse (3) windschiefen Achse zumindest teilweise geschlitzt ist; oder
das ringförmige Andruckelement (20) bezüglich der Mittelachse (3) zumindest teilweise spiralförmig geschlitzt ist.

2. Steckachsensystem zur Radbefestigung gemäß Anspruch 1,
**dadurch gekennzeichnet, dass**
im Bereich der radial vorspringenden Schulter (12) der Außendurchmesser des ersten Endes wenigstens einen Einstich (14) aufweist in welchem ein O-Ring (15) derart anordenbar ist, dass ein Teil des O-Ring-Materials über den Außendurchmesser des ersten Endes heraus ragt.

3. Steckachsensystem zur Radbefestigung gemäß Anspruch 2,
**dadurch gekennzeichnet, dass**
der Innendurchmesser des Andruckelements (20) wenigstens einen Einstich (24) aufweist, in welchen der O-Ring (15) eingreift.

4. Steckachsensystem zur Radbefestigung gemäß einem der vorhergehenden Ansprüche, **dadurch gekennzeichnet, dass**
die Andruckfläche (22) wenigstens einen Einstich (25) aufweist in welchem ein O-Ring (30) derart anordenbar ist, dass ein Teil des O-Ring-Materials über die Andruckfläche (22) heraus ragt.

5. Steckachsensystem zur Radbefestigung gemäß einem der vorhergehenden Ansprüche, **dadurch gekennzeichnet, dass**
das am zweiten Ausfallende (2) angeordnete Gewinde als Gewindehülse (5) ausgeführt ist, welche im zweiten Ausfallende (2) drehbar eingesetzt und in welcher vorzugsweise das Gewinde geringfügig exzentrisch bezüglich der Mittelachse (3) angeordnet ist.

6. Steckachsensystem zur Radbefestigung gemäß einem der vorhergehenden Ansprüche, **dadurch gekennzeichnet, dass**
die am ersten Ausfallende (1) angeordnete Anlagefläche (4) als Innenfläche einer Hülse ausgeführt ist, welche im ersten Ausfallende (1) vorzugsweise durch einstecken, einschrauben oder dergleichen angeordnet ist.

7. Steckachsensystem zur Radbefestigung gemäß einem der vorhergehenden Ansprüche, **dadurch gekennzeichnet, dass**
die am ersten Ausfallende (1) angeordnete Anlagefläche (4) als konisch zulaufende Innenfläche der Achsaufnahmeöffnung des ersten Ausfallendes (1) durch spanlose oder spanende Bearbeitung des Ausfallendes (1) in dieses eingearbeitet ist.

8. Steckachsensystem zur Radbefestigung gemäß einem der vorhergehenden Ansprüche, **dadurch gekennzeichnet, dass**
im Bereich des ersten Endes ein Innensechskant, Torx oder eine dergleichen ähnliche Einrichtung zum Ansetzen eines Werkzeugs vorgesehen ist.

9. Steckachsensystem zur Radbefestigung gemäß einem der vorhergehenden Ansprüche, **dadurch gekennzeichnet, dass**
der Achsabschnitt (11) am äußeren Teil seines zweiten Endes einen sich verjüngenden Außendurchmesser aufweist.

10. Steckachsensystem zur Radbefestigung gemäß einem der vorhergehenden Ansprüche, **dadurch gekennzeichnet, dass**
der Achsabschnitt (11) rohrförmig ausgeführt ist.

11. Steckachsensystem zur Radbefestigung gemäß einem der vorhergehenden Ansprüche, **dadurch gekennzeichnet, dass**
am zweite Ende eine konisch zulaufende Kappe (17) angeordnet ist.

12. Steckachsensystem zur Radbefestigung gemäß einem der vorhergehenden Ansprüche, **dadurch gekennzeichnet, dass**
zwischen den Ausfallenden (1, 2) wenigstens ein weiteres zumindest teilweise geschlitztes und mit einer bezüglich der Mittelachse (3) konisch zulaufenden Andruckfläche (51) versehenes ringförmiges Andruckelement (50) vorgesehen ist, welches im eingebauten Zustand an einer hierzu korrespondierenden Anlagefläche (61) der Nabe (60) zur Anlage kommt und hierdurch die Nabe (60) auf dem Achsabschnitt (11) kraftschlüssig gehalten wird.

13. Steckachsensystem zur Radbefestigung gemäß einem der vorhergehenden Ansprüche, **dadurch gekennzeichnet, dass**
die Konizitätswinkel der Andruckflächen (22, 51) und der Anlageflächen (4, 61) im wesentlichen gleich sind und zwischen 20° und 70°, vorzugsweise zwischen 30° und 60° und besonders bevorzugt zwischen 40° und 50° bezüglich der Mittelachse (3) betragen.

14. Steckachsensystem zur Radbefestigung gemäß einem der vorhergehenden Ansprüche, **dadurch gekennzeichnet, dass**
die Achse (10), die Andruckelemente (20, 50) und/oder die Gewindehülse (5) zumindest teilweise aus einem Material bestehen, welches aus einer Gruppe ausgewählt ist, die Metalle und Metalllegierungen, vorzugsweise Leichtmetalle und besonders bevorzugt Aluminium und Aluminiumlegierungen, Kohlefaserwerkstoffe, Kunststoffe und insbesondere faserverstärkte Kunststoffe, sowie Verbundwerkstoffe aus den vorstehenden Werkstoffen und Kombinationen hiervon enthält.

## Claims

1. A thru axle system for wheel securement, comprising:
an axle (10) with an axle portion (11), which, when the thru axle is fitted, extends between a first drop-out end (1) and a second drop-out end (2) of a frame or a fork, and which is serving to mount a hub (60);
wherein the axle portion of the axle extends, when fitted, through an interior region of the hub;
at least one radially protruding shoulder (12) arranged at a first end of the axle portion (11), which, when fitted, transmits a force acting parallel to the direction of the longitudinal centerline (3) of the axle portion (11);
wherein the outer diameter of the axle (10) is enlarged in the region of the shoulder (12) in contrast to the outer diameter of the axle portion extending between the drop-out ends, and the first end of the axle portion forms by the shoulder a thru axle head;
a thread (16) arranged substantially opposite of the first end at a second end of the axle portion (11), which, when fitted, is screwed into a thread arranged at the second drop-out end (2);
wherein at least one annular pressing member (20) is provided, comprising a substantially centrically lead-through, through which at least a part of the axle portion (11) extends, and at least one inward jutting back protuberance (23) contacting, when fitted, the shoulder (12) such that the shoulder transmits the force at least partly to the pressing member (20);
wherein the pressing member (20) comprising at the side facing the second end of the axle portion (11) a relative to the longitudinal centerline (3) of the axle portion (11) conically tapered pressing surface (22), which, when fitted, comes into contact with a contact surface (4) arranged at the first drop-out end (1) corresponding thereto; and
wherein the annular pressing member (20) is at least partly slotted substantially parallel to the longitudinal centerline (3); or
the annular pressing member (20) is at least partly slotted substantially parallel to an axis skew to the longitudinal centerline (3); or
the annular pressing member (20) is at least partly slotted spirally relative to the longitudinal centerline (3).

2. The thru axle system for wheel securement according to claim 1,
**characterized in that**
in the region of the radially protruding shoulder (12) the outer diameter of the first end comprises at least one groove (14) in which an O-ring (15) is arrangeable such that a part of the O-ring material protrudes beyond the outer diameter of the first end.

3. The thru axle system for wheel securement according to claim 2,
**characterized in that**
the inner diameter of the pressing member (20) comprises at least one groove (24) in which the O-ring (15) engages.

4. The thru axle system for wheel securement according to one of the previous claims, **characterized in that**
the pressing surface (22) comprises at least one groove (25) in which an O-ring (30) is arrangeable such that a part of the O-ring material protrudes beyond the pressing surface (22).

5. The thru axle system for wheel securement according to one of the previous claims, **characterized in that**
the thread arranged at the second drop-out end (2) is embodied as a threaded sleeve (5) which is rotatably inserted in the second drop-out end (2) and in which preferably the thread is arranged slightly eccentrically relative to the longitudinal centerline (3).

6. The thru axle system for wheel securement according to one of the previous claims, **characterized in that**
the contact surface (4) arranged at the first drop-out end (1) is embodied as an inner surface of a sleeve which is arranged in the first drop-out end (1) preferably by insertion, screwing-in or the like.

7. The thru axle system for wheel securement according to one of the previous claims, **characterized in that**
the contact surface (4) arranged at the first drop-out end (1) is worked into the first drop-out end (1) as a conically tapered inner surface of the axle mounting aperture in the first drop-out end (1) by the first drop-out end (1) being formed or machined.

8. The thru axle system for wheel securement according to one of the previous claims, **characterized in that**
a hexagon socket, torx or some similar means for locating a tool is provided in the region of the first end.

9. The thru axle system for wheel securement according to one of the previous claims, **characterized in that**
the axle portion (11) comprises at the outer part of its second end a tapered outer diameter.

10. The thru axle system for wheel securement according to one of the previous claims, **characterized in that**
the axle portion (11) is embodied tubular.

11. The thru axle system for wheel securement according to one of the previous claims, **characterized in that**
a conically tapered cap (17) is arranged at the second end.

12. The thru axle system for wheel securement according to one of the previous claims, **characterized in that**
at least one further annular pressing member (50) embodied at least partly slotted and with a conically tapered pressing surface (51) relative to the longitudinal centerline (3) is disposed between the drop-out ends (1, 2), the pressing member (50) when fitted comes into contact with a corresponding contact surface (61) of the hub (60) and thereby force-fitting the hub (60) on the axle portion (11).

13. The thru axle system for wheel securement according to one of the previous claims, **characterized in that**
the conicity angles of the pressing surfaces (22, 51) and contact surfaces (4, 61) are substantially the same and range between 20° and 70°, preferably between 30° and 60° and particularly preferred between 40° and 50° relative to the longitudinal centerline (3).

14. The thru axle system for wheel securement according to one of the previous claims, **characterized in that**
the axle (10), pressing members (20, 50) and/or threaded sleeve (5) are made at least partly of a material selected from a group comprising metals and metal alloys, preferably light metals and particularly preferred aluminum and aluminum alloys, carbon fiber materials, plastics and especially fiber-reinforced plastics, as well as composites and combinations of the above materials.

## Revendications

1. Système d'arbre de roue pour la fixation d'une roue comprenant :
un essieu (10) avec une section d'essieu (11), qui s'étend dans l'état de montage de l'arbre de roue entre une première extrémité d'entraxe (1) et une seconde extrémité d'entraxe (2) d'un cadre ou d'une fourche et sert à recevoir un moyeu (60);
système dans lequel la section d'essieu de l'essieu s'étend, dans l'état de montage, par une région intérieure du moyeu; au moins un épaulement (12) en saillie radiale, disposé sur une première extrémité de la section d'essieu (11) et par lequel est transmise, dans l'état de montage, une force agissant parallèlement à la direction de l'axe médian (3) de la section d'essieu (11);
système dans lequel le diamètre extérieure de l'essieu (10) est agrandit en région de l'épaulement (12) face le diamètre extérieure de la section d'essieu s'étendant entre les extrémités d'entraxe, et la première extrémité de la section d'essieu constitue une tête d'arbre de roue par l'épaulement;
un filetage (16) disposé sur une seconde extrémité de la section d'essieu (11) essentiellement opposée à la première extrémité, lequel filetage est vissé, dans l'état de montage, dans un taraudage disposé sur la seconde extrémité d'entraxe (2);
système dans lequel est prévu au moins un élément de pression annulaire (20), qui présente une traversée essentiellement centrale, au travers de laquelle s'étend au moins une partie de la section d'essieu (11), et au moins un emboîtement intérieur (23), sur lequel s'applique l'épaulement (12) dans l'état de montage, de sorte que l'épaulement transmet la force, au moins en partie, à l'élément de pression (20),
système dans lequel l'élément de pression (20) présente, sur le côté tourné vers la seconde extrémité de la section d'essieu (11), une surface de pression (22) se terminant en cône par rapport à l'axe médian (3) de la section d'essieu (11), laquelle surface arrive au contact, dans l'état de montage, d'une surface d'appui (4) correspondante disposée sur la première extrémité d'entraxe (1),
et système dans lequel l'élément de pression annulaire (20) est fendu, au moins en partie, de façon essentiellement parallèle à l'axe médian (3); ou
l'élément de pression annulaire (20) est fendu, au moins en partie, de façon essentiellement parallèle à un axe de travers par rapport à l'axe médian (3) ; ou
l'élément de pression annulaire (20) est fendu en spirale, au moins en partie, par rapport à l'axe médian (3).

2. Système d'arbre de roue pour la fixation d'une roue suivant la revendication 1, **caractérisé en ce que**,
dans la zone de l'épaulement (12) en saillie radiale, le diamètre extérieur de la première extrémité présente au moins une gorge (14), dans laquelle peut être disposé un joint torique (15) de telle sorte qu'une partie du matériau du joint torique dépasse du diamètre extérieur de la première extrémité.

3. Système d'arbre de roue pour la fixation d'une roue suivant la revendication 2, **caractérisé en ce que**
le diamètre intérieur de l'élément de pression (20) présente au moins une gorge (24), dans laquelle s'engage le joint torique (15).

4. Système d'arbre de roue pour la fixation d'une roue suivant l'une des revendications précédentes,
**caractérisé en ce que**
la surface de pression (22) présente au moins une gorge (25), dans laquelle peut être disposé un joint torique (30) de telle sorte qu'une partie du matériau du joint torique dépasse de la surface de pression (22).

5. Système d'arbre de roue pour la fixation d'une roue suivant l'une des revendications précédentes,
**caractérisé en ce que**
le filetage disposé sur la seconde extrémité d'entraxe (2) est réalisé sous forme de manchon fileté (5), qui est monté tournant dans la seconde extrémité d'entraxe (2) et dans lequel le filetage est disposé de préférence de façon légèrement excentrée par rapport à l'axe médian (3).

6. Système d'arbre de roue pour la fixation d'une roue suivant l'une des revendications précédentes,
**caractérisé en ce que**
la surface d'appui (4), disposée sur la première extrémité d'entraxe (1), est réalisée sous forme de surface intérieure d'un manchon, qui est disposé dans la première extrémité d'entraxe (1) de préférence par emboîtement, vissage ou analogues.

7. Système d'arbre de roue pour la fixation d'une roue suivant l'une des revendications précédentes,
**caractérisé en ce que**
la surface d'appui (4), disposée sur la première extrémité d'entraxe (1), est incorporée dans l'extrémité d'entraxe (1), sous forme de surface intérieure se terminant en cône de l'ouverture de réception de la première extrémité d'entraxe (1), par formage ou usinage de l'extrémité (1).

8. Système d'arbre de roue pour la fixation d'une roue suivant l'une des revendications précédentes,
**caractérisé en ce qu'**un six pans creux, Torx ou un autre dispositif analogue est prévu pour la pose d'un outil dans la zone de la première extrémité.

9. Système d'arbre de roue pour la fixation d'une roue suivant l'une des revendications précédentes,
**caractérisé en ce que** la section d'essieu (11) présente sur la partie extérieure de sa seconde extrémité un diamètre extérieur se rétrécissant.

10. Système d'arbre de roue pour la fixation d'une roue suivant l'une des revendications précédentes,
**caractérisé en ce que** la section d'essieu (11) a une réalisation tubulaire.

11. Système d'arbre de roue pour la fixation d'une roue suivant l'une des revendications précédentes,
**caractérisé en ce qu'**un capuchon (17) se terminant en cône est disposé sur la seconde extrémité.

12. Système d'arbre de roue pour la fixation d'une roue suivant l'une des revendications précédentes,
**caractérisé en ce que**
au moins un autre élément de pression (50) annulaire, fendu au moins en partie et muni d'une surface de pression (51) se terminant en cône par rapport à l'axe médian (3), est prévu entre les extrémités d'entraxe (1, 2), lequel élément de pression arrive au contact, dans l'état de montage, d'une surface d'appui correspondante (61) du moyeu (60) et le moyeu (60) est maintenu de ce fait par force d'adhérence sur la section d'essieu (11).

13. Système d'arbre de roue pour la fixation d'une roue suivant l'une des revendications précédentes,
**caractérisé en ce que**
les angles de conicité des surfaces de pression (22, 51) et des surfaces d'appui (4, 61) sont essentiellement égaux et sont compris entre 20° et 70°, de préférence entre 30° et 60° et de façon particulièrement préférentielle entre 40° et 50° par rapport à l'axe médian (3).

14. Système d'arbre de roue pour la fixation d'une roue suivant l'une des revendications précédentes,
**caractérisé en ce que**
l'essieu (10), les éléments de pression (20, 50) et/ou le manchon fileté (5) sont constitués au moins en partie d'un matériau sélectionné parmi un groupe qui comporte les métaux et alliages de métaux, de préférence des alliages légers et de façon particulièrement préférentielle de l'aluminium et des alliages d'aluminium, des matériaux en fibres de carbone, des matières plastiques et en particulier des matières plastiques renforcées par des fibres, ainsi que des matériaux composites constitués des matériaux précités et de combinaisons de ces derniers.
